Europäisches Patentamt

European Patent Office

Office européen des brevets

(19)

(11) Publication number: **0 129 270**
**B1**

(12) **EUROPEAN PATENT SPECIFICATION**

(45) Date of publication of patent specification: **17.08.88**

(21) Application number: **84200754.4**

(22) Date of filing: **28.05.84**

(51) Int. Cl.⁴: **F 16 C 33/78**

(54) Sealing ring for a rolling bearing.

(30) Priority: **09.06.83 NL 8302055**

(43) Date of publication of application:
**27.12.84 Bulletin 84/52**

(45) Publication of the grant of the patent:
**17.08.88 Bulletin 88/33**

(84) Designated Contracting States:
**DE FR GB IT NL SE**

(56) References cited:
**CH-A- 208 602**
**FR-A- 976 406**
**FR-A-1 404 592**
**FR-A-1 450 435**
**FR-A-2 162 998**

(73) Proprietor: **SKF Industrial Trading &**
**Development Company B.V.**
**Kelvinbaan 16 P.O. Box 50**
**NL-3430 AB Nieuwegein (NL)**

(72) Inventor: **Korenhof, Abraham**
**Damhertlaan 91**
**Driebergen (NL)**

(74) Representative: **Merkelbach, B.**
**SKF Engineering & Research Centre B.V. P.O.**
**Box 2350**
**NL-3430 DT Nieuwegein (NL)**

Courier Press, Leamington Spa, England.

## Description

The invention concerns a rolling bearing comprising an inner race, an outer race, at least one row of rolling elements between said races and a pair of sealing rings disposed on respective opposite sides of the rolling elements, each sealing ring comprising a substantially flat rigid annular element, the outer peripheral edge of which is accommodated in an annular groove in the outer race, and the inner peripheral edge of which defines a relatively narrow annular gap with the inner race, the rigid element carrying on the side thereof remote from the rolling elements an elastic sealing element of substantially constant thickness, the inner peripheral part of which extends radially inwardly of said rigid element through said gap and axially towards the rolling elements.

A rolling bearing having sealing rings of such type is disclosed in the French patent 2,162,998 according to which said sealing rings comprise elastic sealing elements which end parts rest upon the inner race of the bearing in general according to a circular line. This type of sealing serves well, for retaininhg a greasy lubricant inside the bearing and to prevent dirt from outside.

The disadvantage of the known sealing ring, however, is that when a relatively free-flowing lubricant is used the lubricant leaks outward along the end part of the sealing element. The use of a free-flowing lubricant or oil is needed, for example, in bearings of which it is required that as little sound as possible be produced in operation.

The object of the invention is to procure a sealing ring for a rolling bearing by which a leakproof seal is obtained in particular for free-flowing lubricants.

This object is accomplished in that pursuant to the invention the axially inner end part of the sealing element is directed to the rolling elements whereby the inner peripheral part lies substantially flat against the inner race over an axial length, which is greater than the radial width of the said gap or slot.

In this way, when in operation, now a relative large part of the sealing element can effectively be pressed against the inner race, owing to the fact that the abutting part is elastic and in the space inside the bearing a slight overpressure prevails due to increase in temperature. Owing to the relatively narrow slot between the element of a rigid material and the inner race, the part of the sealing element projecting inward cannot be pushed outward, so that a leak-free seal is obtained, while a very small portion of the free-flowing lubricant or oil creeps over a distance between the projecting part and the inner race, whereby lubrication between these parts is obtained so that no excessive frictional torques and accompanying temperature increases are produced.

A plurality of notches, spaced part, is advantageously made in the inner periphery of the annular sealing element of elastic material, the inner peripheral edge of the annular sealing element of elastic material preferably being provided with a thickening directed inward.

In this way, owing to the thickening, the inner edge of the abutting part of the sealing element is slightly raised, whereby a small quantity of lubricant is better able to get, via the notches, between said part and the inner race of the rolling bearing, and an improved lubrication is obtained.

A sealing ring of this preferred construction is defined in independent claim 5.

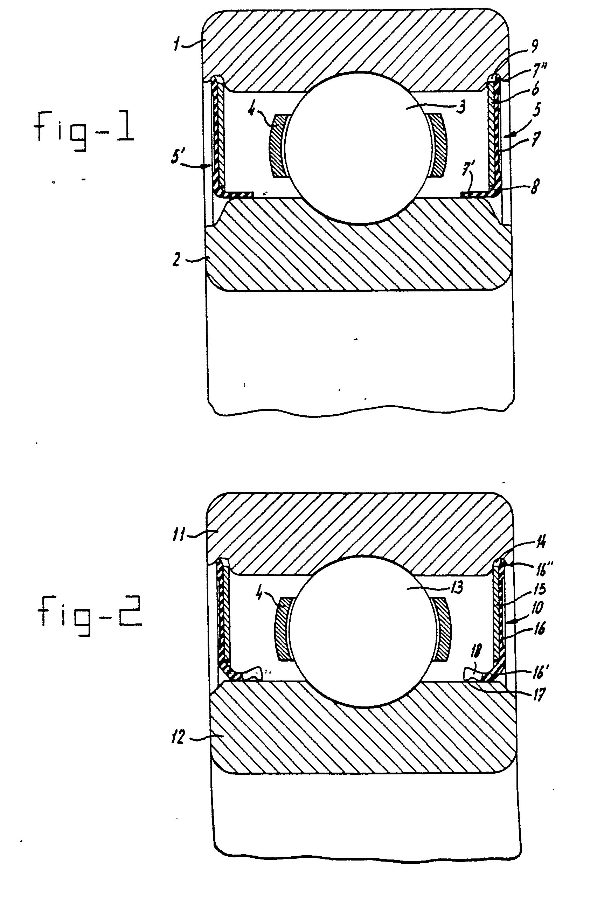

The invention is described in greater detail with reference to the drawing, where examples of the invention are shown and wherein Figure 1 shows, in axial cross section, a rolling bearing with sealing rings pursuant to the invention.

Figure 2 shows another embodiment of the sealing ring pursuant to the invention.

As shown in Figure 1, the rolling bearing comprises an outer race 1, an inner race 2 and one set of ball-shaped rolling members 3, placed between said races, a cage 4 likewise being present. At either edge the rolling bearing is closed off by sealing rings 5 and 5', whichh are entirely alike, so that only the sealing ring 5 will be described in greater detail.

The sealing ring 5 comprises an annular element 6 of a rigid material, for example a metal, having the shape of a flat ring. To said flat ring is attached the sealing element 7 of an elastic material, which likewise has the shape of a flat ring, the inner peripheral part 7' of said element projecting outside the inner peripheral edge of the element 6 and being bent inward to rest against the inner race 2 of the rolling bearing. At the same time said part 7' is guided by the relatively narrow slot 8 between the inner peripheral edge of the element 6 and the inner race 2.

The outer peripheral part 7'' of the sealing element 7 projects slightly past the outer peripheral edge of the element 6, so that said part 7'' forms a snap connection for fixing the sealing ring 5 in the annular groove 9 in the outer race 1.

In Figure 2 is shown a sealing ring 10 of a rolling bearing, which bearing consists of an outer race 11, an inner race 12 and a row of rolling members 13. The sealing ring 10 is fixed in an annular groove 14 in the outer race 11 in the same way as the sealing ring in Figure 1.

The sealing ring 10 comprises an element 15 of a rigid material, for example a metal, in the shape of a flat ring, to which is attached a sealing element 16 of an elastically deformable material. The sealing element 16 comprises a projecting edge 16'', acting as a snap connection, and a turned-over inner peripheral part 16' which resets against the inner race 12. The inner peripheral edge of the part 16' is provided with a thickening 17, directed inward, while in this inner periphery is provided a plurality of notches 18, spaced apart, which notches, for example, are U-shaped.

To bring the sealing rings 5 and 10 shown in Figures 1 and 2 into the bearing, the sealing ring is in each instance first placed on a mandrel or bar having a diameter coinciding with the outside diameter of the inner race, said mandrel is then placed against the inner race and the sealing ring pushed off the mandrel.

**Claims**

1. A rolling bearing comprising an inner race (2, 12), an outer race (1, 11), at least one row of rolling elements (3, 13) between said races and a pair of sealing rings (5, l0) disposed on respective opposite sides of the rolling elements, each sealing ring comprising a substantially flat rigid annular element (6, 15), the outer peripheral edge of which is accommodated in an annular groove (9, 14) in the outer race, and the inner peripheral edge of which defines a relatively narrow annular gap with the inner race, the rigid element carrying on the side thereof remote from the rolling elements an elastic sealing element (7, 16) of substantially constant thickness, the inner peripheral part of which extends radially inwardly of said rigid element through said gap and axially towards the rolling elements, characterized in that, the axially inner end part of the sealing element (7, 16) is directed to the rolling elements (3, 13) whereby the inner peripheral part (7', 16') lies substantially flat against the inner race (2, 12) over an axial length, which is greater than the radial width of the said gap (8).

2. Rolling bearing according to claim 1, characterized in that the axially inner end part of the annular sealing element (7, 16) of elastic material is formed with a plurality of spaced apart notches (18).

3. Rolling bearing according to claim 1 or 2, characterized in that the inner peripheral edge (16') of the sealing element (10) of elastic material is provided with a thickening (17), directed radially inward.

4. Rolling bearing according to claims 1-3, characterized in that to the rigid annular element (6, 15) is attached a second element (7, 16) of an elastic material in the shape of a flat ring, the outer peripheral edge (7'', 16'') of which projects outside the peripheral edge of the rigid annular element (6, 15) for forming a snap fastening for the sealing ring (5, l0) in the said annular groove (9, 14) in the outer race (1, 11).

5. A sealing ring for use in a rolling bearing according to any one of the preceding claims comprising a substantially flat rigid annular element (15) carrying on one side thereof an elastic sealing element (16) of substantially constant thickness, the inner peripheral edge of the sealing element extending radially inwardly of the inner peripheral edge of the rigid element, characterized in that, the inner edge of the sealing element (10) is provided on the side thereof remote from the rigid element (15) with a thickened portion (17) and with a plurality of notches (18) extending through the thickened portion of the sealing element from the inner edge thereof.

6. Sealing ring according to claim 5, charac-

terized in that, to the rigid annular element (15) is attached a second element of an elastic material (16) in the shape of a flat ring, the outer peripheral edge of which projects outside the outer peripheral edge of the rigid annular element.

7. Sealing ring according to claim 6, characterized in that, the second element of an elastic material (16) forms a whole with the sealing element (10).

**Patentansprüche**

1. Wälzlager, bestehend aus einem inneren Laufring (2, 12), einem äußeren Laufring (1, 11), mindestens einer Reihe von Wälzkörpern (3, 13) zwischen den Laufringen und einem Paar von Dichtringen (5, l0), die auf zueinander entgegengesetzten Seiten der Wälzkörper angeordnet sind, wobei ein jeder Dichtring aus einem im wesentlichen flachen steifen Ringelement (6, 15) besteht, dessen äußere Umfangskante in einer Ringnut (9, 14) im äußeren Laufring aufgenommen ist und dessen innere Umfangskante mit dem inneren Laufring einen verhältnismäßig engen Ringspalt bestimmt, und wobei das steife Element auf seiner von den Wälzkörpern abgewandten Seite ein elastisches Dichtelement (7, 16) von im wesentlichen gleichbleibender Dicke trägt, dessen innerer Umfangsteil sich radial über das steife Element hinaus nach einwärts durch den Spalt und axial gegen die Wälzkörper erstreckt, dadurch gekennzeichnet, daß der axial innere Endteil des Dichtelements (7, 16) auf die Wälzkörper (3, 13) zu gerichttet ist, wodurch der innere Umfangsteil (7', 16') im wesentlichen flach gegen den inneren Laufring (2, 12) über eine axiale Länge aufliegt, die größer als die radiale Breite des Spaltes (8) ist.

2. Wälzlager nach Anspruch 1, dadurch gekennzeichnet, daß der axial innere Endteil des ringförmigen Dichtelements (7, 16) aus elastischem Material mit einer Vielzahl von zueinander beabstandeten Aussparungen (18) ausgebildet ist.

3. Wälzlager nach Anspruch 1 oder 2, dadurch gekennzeichnet, daß die innere Umfangskante (16') des Dichtelements (16) aus elastischem Material mit einer radial nach einwärts gerichteten Verdickung (17) versehen ist.

4. Wälzlager nach den Ansprüchen 1 - 3, dadurch gekennzeichnet, daß an dem steifen Ringelement (6, 15) ein zweites Element (7, 16) aus einem elastischen Material in der Form eines flachen Rings angebracht ist, dessen äußere Umfangskante (7'', 16'') über die Umfangskante des steifen Ringelements (6, 15) zur Bildung einer Schnappbefestigung für den Dichtring (5, 10) in der Ringnut (9, 14) im äußeren Laufring (1, 11) vorsteht.

5. Dichtring zur Verwendung in einem Wälzlager gemäß einem der vorhergehenden Ansprüche, bestehend aus einem im wesent lichen flachen steifen Ringelement (15), welches an seiner einen Seite ein elastischen Dichtelement (16) von im wesentlichen gleichbleibender Dicke trägt, dessen innere Umfangskante sich radial einwärts über die Umfangskante des steifen Elements erstreckt, dadurch gekennzeichnet, daß die Innenkante des Dichteelements (16) an der von dem steifen Element (15) abgewandten Seite mit einem verdickten Abschnitt (17) und mit einer Vielzahl von Aussparungen (18) versehen ist, die sich durch den verdickten Abschnitt des Dichteelements von dessen Innenkannte aus erstrecken.

6. Dichtring nach Anspruch 5, dadurch gekennzeichnet, daß an dem steifen Ringelement (15) ein zweites Element aus elastischem Material (16) in Gestalt eines flachen Ringes angebracht ist, dessen äußere Umfangskante auswärts über die äußere Umfangskante des steifen Ringelements vorsteht.

7. Dichtring nach Anspruch 6, dadurch gekennzeichnet, daß das zweite Element aus einem elastischen Material (16) ein Ganzes mit dem Dichtelement (10) bildet.

## Revendications

1. Roulement à billes comprenant une bague de roulement intérieure (2, 12), une bague de roulement extérieure (1, 11), au moins une rangée d'éléments roulants (3, 13) entre lesdites bagues de roulement, et une paire de rondelles d'étan- chéité (5, l0) disposées sur les côtés opposés respectifs des éléments de roulement, chaque rondelle d'étanchéité comprenant un élément annulaire (6, 15) essentiellement plat et rigide, dont le bord périphérique extérieur est ajusté dans une rainure annulaire (9, 14) de la bague de roulement extérieure, et dont le bord périphérique intérieur définit un espace annulaire relativement étroit avec la bague de roulement intérieure, l'élément rigide portant sur le côté de la bague de roulement intérieure, écarté des éléments de roulement, un élément élastique d'étanchéité (7, 16) d'épaisseur sensiblement constante, dont la partie périphérique intérieure s'étend radialement vers l'intérieur dudit élément rigide à travers ledit espace, et axialement vers les éléments roulants, caractérisé par le fait que l'extrémité intérieure s'étendant axialement de l'élément d'étanchéité (7, 16) est dirigée vers les éléments roulants (3, 13), grâce à quoi la partie périphérique intérieure (7', 16') repose sensiblement à plat contre la bague de roulement intérieure (2, 12) sur une longueur axiale qui est plus grande que la largeur radiale dudit espace (8).

2. Roulement à billes selon la revendication 1, caractérisé par le fait que l'extrémité intérieure s'étendant axialement de l'élément d'étanchéité (7, 16), fait d'un matériau élastique, est formée d'une pluralité d'encoches espacées l'une de l'autre.

3. Roulement à billes selon les revendications 1 ou 2, caractérisé par le fait que le bord périphérique intérieur (16') de l'élément d'étanchéité (10), fait d'un matériau élastique, comporte un épaississement (17), dirigé radialement vers l'intérieur.

4. Roulement à billes selon l'une quelconque des revendications 1 à 3, caractérisé par le fait qu'à l'élément rigide annulaire (6, 15) est fixé un second élément (7, 16), fait d'un matériau élastique et en forme d'anneau plat, dont le bord périphérique extérieur (7'', 16'') s'étend en dehors du bord périphérique de l'élément rigide annulaire (6, 15), pour former une fixation encli- quetable pour la rondelle d'étanchéité (5, 10) dans ladite rainure annulaire (9, 14) dans la bague de roulement extérieure (1, 11).

5. Rondelle d'étanchéité pour utilisation dans un roulement à billes selon l'une quelconque des revendications 1 à 4, comprenant un élément annulaire rigide (15) essentiellement plat, portant sur un se ses côtés un élément élastique d'étanchéité (16) d'épaisseur sensiblement constante, le bord périphérique intérieur de l'élément d'étanchéité s'étendant radialement vers l'intérieur du bord périphérique intérieur de l'élément rigide, caractérisé par le fait que le bord intérieur de l'élément d'étanchéité (10) est pourvu, sur son côté situé à l'opposé de l'élément rigide (15), d'une partie plus épaisse (17), avec une pluralité d'encoches (18) s'étendant à travers la partie plus épaisse de l'élément d'étanchéité, depuis le bord intérieur de cet élément d'étanchéité.

6. Rondelle d'étanchéité selon la revendication 5, caractérisée par le fait qu'à l'élément rigide annulaire (15) est fixé un second élément (16), fait d'un matériau élastique et en forme d'un anneau plat, dont le bord périphérique extérieur s'étend à l'extérieur du bord périphérique extérieur de l'élément rigide annulaire.

7. Rondelle d'étanchéité selon la revendication 6, caractérisée par le fait que le second élément (16), fait d'un matériau élastique, forme un tout avec l'élément d'étanchéité (10).

0 129 270

fig-1

fig-2